Europäisches Patentamt

(19) European Patent Office

Office européen des brevets

(11) Numéro de publication: **0 003 001**
**B1**

(12) **FASCICULE DE BREVET EUROPEEN**

(45) Date de publication du fascicule de brevet: **12.08.81**

(51) Int. Cl.³: **G 02 C 5/22**

(21) Numéro de dépôt: **78810029.5**

(22) Date de dépôt: **07.12.78**

(54) **Charnière de lunettes.**

(30) Priorité: **22.12.77 CH 15856/77**

(43) Date de publication de la demande:
**11.07.79 Bulletin 79/14**

(45) Mention de la délivrance du brevet:
**12.08.81 Bulletin 81/32**

(84) Etats Contractants Désignés:
**DE FR GB IT**

(56) Documents cités:
**FR - A - 2 028 893**
**US - A - 3 957 360**

(73) Titulaire: **LA NATIONALE S.A.**
**2 Rue des Falaises**
**CH-1211 Geneve 8 (CH)**

(72) Inventeur: **Zellweger, Conrad**
**7, chemin des Voirons**
**CH-1224 Chene-Bougeries (CH)**
Inventeur: **Biondina, Joseph**
**1B, chemin de la Vieille-Fontaine**
**CH-1233 Bernex (CH)**

(74) Mandataire: **Ardin, Pierre**
**PIERRE ARDIN & CIE 22, rue du Mont-Blanc**
**CH-1211 Geneve 1 (CH)**

Courier Press, Leamington Spa, England.

## Charnière de lunettes

On connaît déjà des charnières de lunettes comprenant deux charnons, dont l'un présente une partie avec un profil de came, l'autre charnon comprenant un poussoir soumis à une action élastique le sollicitant contre le profil de came, le charnon présentant le profil de came étant en métal ductile, le profil de came étant constitué par une pièce portée, de dureté plus grande que celle du charnon présentant le profil de came.

Dans les charnières connues de ce genre, la pièce de plus grande dureté est rapportée sur le charnon par engagement dans une fente de celui-ci, le plan de cette fente étant sensiblement perpendiculaire à l'axe d'articulation. Cette construction est relativement compliquée et donc coûteuse. En outre, la pièce de plus grande dureté introduite dans la fente ne présente qu'une faible largeur et ne permet donc pas d'offrir une grande surface d'appui par le poussoir.

La présente invention a pour but d'offrir une charnière de lunettes du type précité, de construction simple et économique, permettant d'obtenir en outre une surface relativement grande pour l'appui du poussoir contre le profil de came.

A cet efet, la charnière objet de l'invention est caractérisée en ce que la pièce rapportée est constituée par une lame dont une face constitue le profil de came et dont l'autre face épouse la forme extérieure d'une partie du charnon et enserre cette partie de charnon.

Le dessin annexé représente, schématiquement et à titre d'exemple, une forme d'exécution de la charnière de lunettes objet de l'invention.

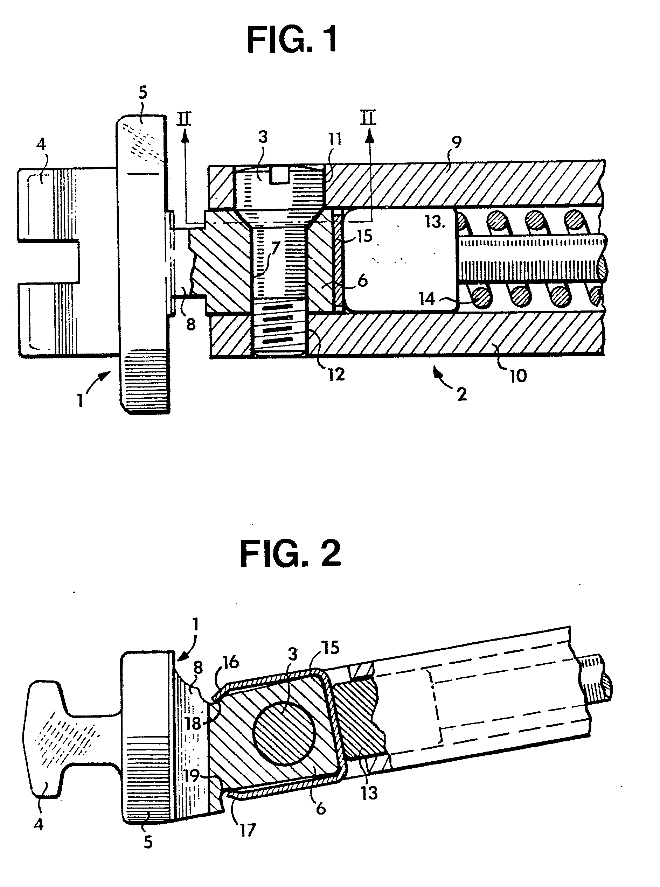

La figure 1 est une vue de cette forme d'exécution, avec coupe partielle, selon un plan parallèle à l'axe de pivotement de la charnière; la figure 2 en est une vue avec coupe partielle selon la ligne II—II de la figure 1.

La charnière représentée comprend deux charnons 1 et 2 articulés l'un sur l'autre au moyen d'une vis à portée 3. Le charnon 1 présente une patte 4 destinée à être noyée dans la résine constituant la monture, cette patte 4 étant adjacente à une plaquette 5. Cette dernière est reliée à une portion 6 présentant un perçage 7 pour la vis 3 par l'intermédiaire d'une partie amincie 8 qui est destinée à être déformée pour permettre de régler l'orientation des branches par rapport à la monture. A cet effet, le charnon 1 est en un alliage relativement ductile, par exemple du maillechort ou du laiton.

Le charnon 2 se termine par deux branches 9 et 10 disposées de part et d'autre de la portion 6. La branche 9 présente un alésage 11 pour la tête de la vis 3, tandis que la branche 10 présente un taraudage 12 permettant le serrage de cette vis. Entre les branches 9 et 10 est monté coulissant un poussoir 13 soumis à l'action d'un ressort 14 qui le sollicite en direction du charnon 1. Ce poussoir coopère avec un profil de came constitué par une lame élastique 15 portée par le charnon 1. Cette pièce 15, en une matière de dureté plus grande que celle du charnon, est constituée par une lame d'acier, en forme générale de U et dont les extrémités des branches sont recourbées l'une en direction de l'autre, comme indiqué en 16 et 17. Ces extrémités recourbées sont engagées dans des évidements 18 et 19, ce qui retient la pièce 15 sur la portion 6 du charnon 1.

La portion 6 du charnon 1 présente un contour extérieur corresondant au profil de came, et la pièce 15 enserre élastiquement ce contour.

Comme on le voit, la portion 6 est de forme générale rectangulaire et la lame 15 présente dans un plan perpendiculaire à l'axe de pivotement de la charnière une section générale de forme rectangulaire correspondante, afin de s'appliquer sur les trois côtés de la portion 6.

Il ressort sans autre de la figure 1 qu'après le montage, la lame 15 ne peut plus se déplacer parallèlement à l'axe de pivotement, puisqu'elle est retenue entre les branches 9 et 10 du charnon 2. Il en résulte que les extrémités recourbées 16 et 17 ne sont pas indispensables et pourraient être supprimées. Toutefois, ces extrémités recourbées 16 et 17 rendent plus facile la retenue en position de la lame 15 sur le charnon 1 avant la réunion des deux charnons au moyen de la vis 3.

Comme on le voit à la figure 1, la largeur de la lame 15 est inférieure à l'épaisseur de la partie 6 du charnon 1. De cette façon, les deux faces de la partie 6 prennent appui contre les faces intérieures des branches 9 et 10 du charnon 2, ce qui permet de réaliser entre les charnons 1 et 2 une articulation pratiquement exempte de jeu.

## Revendications

1. Charnière de lunettes comprenant deux charnons (1,2), dont l'un (1) présente une partie avec un profil de came, l'autre charnon (2) comprenant un poussoir (13) soumis à une action élastique le sollicitant contre le profil de came, le charnon (1) présentant le profil de came étant en métal ductile, le profil de came étant constitué par une pièce de portée (15), de dureté plus grande que celle du charnon (1) présentant le profil de came, caractérisée en ce que la pièce de portée est constituée par une lame (15) dont une face constitue le profil de came et dont l'autre face épouse la forme extérieure d'une partie (6) du charnon et enserre cette partie (6) de charnon.

2. Charnière selon la revendication 1, caractérisée en ce que la lame (15) est élastique, la partie (6) portant la lame élastique (15) présentant, dans un plan perpendiculaire à l'axe de pivotement de la charnière, une section générale de forme rectangulaire, la lame élastique étant recourbée en forme générale de U et venant s'appliquer sur trois côtés de ladite section rectangulaire.

3. Charnière selon la revendication 2, caractérisée en ce que les extrémités des branches de la lame en forme de U sont recourbées (en 16 et 17) l'une en direction de l'autre et sont engagées dans des évidements (18, 19), de forme correspondante, du charnon (1) présentant le profil de came.

4. Charnière selon la revendication 2 ou 3, caractérisée en ce que la largeur de la lame élastique (15) est inférieure ou égale à l'épaisseur de la partie (6) du charnon (1) portant cette lame (15).

## Claims

1. A spectacle hinge comprising to hinge parts (1, 2), one of which (1) having a portion with a cam profile, the other hinge part (2) comprising a cam follower (13), which is urged under elastic action against the cam profile, the hinge part (1) which presents the cam profile is made of a ductile metal, the cam profile consisting of a bearing piece (15) having a hardness greater than that of the hinge part (1), characterized in that said bearing piece consists of a strip (15), one face of which constitutes the cam profile, and the other face of which fits the outer surface of the portion (6) of the hinge part and grips around said portion.

2. A spectacle hinge according to Claim 1, characterized in that the strip (15) is resilient, the portion (6) carrying the strip (15) being of generally rectangular shape in a plane perpendicular to the pivotal axis of the hinge, said resilient strip being of generally U-shape and engaging three sides of said rectangular portion.

3. A spectacle hinge according to Claim 2, characterized in that the ends (16, 17) of the U-shaped strip are recurved toward one another and are engaged in recesses (18, 19) of corresponding shape provided in the hinge part (1) having the cam profile.

4. A spectacle hinge according to Claim 2 or 3, characterized in that the width of the resilient strip (15) is less than or equal to the thickness of the portion (6) of the hinge part carrying the strip (15).

## Patentansprüche

1. Brillenscharnier bestehend aus zwei Scharnierhälften (1, 2) von welchen die eine (1) ein Teilstück mit nockenförmigem Profil und die andere (2) einen Druckfinger (13) aufweist, welcher Druckfinger elastisch gegen das nockenförmige Profil gepresst wird, wobei die Scharnierhälfte (1), welche das nockenförmige Profil aufweist, aus verformbarem Metal gefertigt ist und jenes nockenförmige Profil aus einem Auflagestück (15) besteht, dessen Härte grösser ist wie die der Scharnierhälfte (1), welche das nockenförmige Profil aufweist, dadurch gekennzeichnet, dass das Auflagestück aus einem Blatt (15), dessen eine Fläche das nockenförmige Profil bildet und dessen andere Fläche sich der äusseren Form des Teilstückes (6) der Scharnierhälfte (1) anpasst und dieses Teilstück (6) eng umfasst.

2. Scharnier nach Anspruch 1, dadurch gekennzeichnet, dass das Blatt (15) elastisch ist, dass das Teilstück (6) welches das elastische Blatt (15) trägt, in einer Ebene senkrecht zur Drehachse des Scharnieres einen allgemein rechteckigen Umriss aufweist, und dass das elastische Blatt U-förmig gebogen ist und sich an drei Seiten des rechteckigen Umrisses anlegt.

3. Scharnier nach Anspruch 2, dadurch gekennzeichnet, dass die Endstücke (16, 17) des U-förmigen Blattes gegeneinander zu gebogen sind und in Vertiefungen (18, 19) der Scharnierhälfte (1), welche ihrer Form entsprechen, eingeführt sind.

4. Scharnier nach Anspruch 2 oder 3, dadurch gekennzeichnet, dass die Breite des elastischen Blattes (15) weniger gross oder gleich gross ist wie die Dicke des Teilstückes (6) der Scharnierhälfte (1), welche dieses Blatt (15) trägt.

# FIG. 1

# FIG. 2